# EUROPEAN PATENT APPLICATION

(11) **EP 4 657 882 A1**
(43) Date of publication of application: **03.12.2025**
(21) Application number: 24178867.8
(22) Date of filing: 29.05.2024
(51) Int. Cl.: H04R 1/10, G10L 21/0208, H04R 3/00

(54) **AUDIO DEVICE WITH SIDETONE PROCESSING**

(71) Applicant: GN Hearing A/S, 2750 Ballerup (DK)
(72) Inventor: GKANOS, Konstantinos, Ballerup (DK); BÜLOW, Allan Ryom Mejlgren von, Ballerup (DK)
(74) Representative: Aera A/S

(57) **Abstract**

An audio device is disclosed comprising a plurality of microphones; an output transducer configured to output a near-end audio output signal; and processor circuitry comprising a signal processor module configured to provide a far-end audio output signal and a sidetone module configured to provide a sidetone audio output signal. The signal processor module is configured to process a first audio input signal and a second audio input signal for provision of a plurality of filter parameters, wherein the sidetone module is configured to obtain first data indicative of the plurality of filter parameters and to process the first audio input signal and the second audio input signal for provision of the sidetone audio output signal using one or more filters based on the first data, and wherein the near-end audio output signal is based on the sidetone audio output signal and a far-end audio input signal.

## Description

The present disclosure pertains to the field of audio devices and methods performed by audio devices, and in particular to audio devices with sidetone processing and related methods.

### BACKGROUND

Sidetone refers to the audible feedback of one's own voice during a voice call or communication session. In traditional telecommunication systems, sidetone is provided naturally through the handset or earpiece, allowing users to hear their own voice as they speak, which helps maintain a natural speaking volume and improves speech quality.

However, with the advent of modern audio devices such as headphones, earphones, and headsets, sidetone processing has become more complex. Users of such audio devices often experience difficulties in adjusting their speaking volume and maintaining conversational quality due to the lack of natural sidetone feedback.

Existing solutions for sidetone processing in audio devices typically involve hardware components such as microphones and signal processing circuits. These solutions aim to capture the user's voice through a microphone, process the audio signal, and feed it back to the user's earphones or headphones in real-time, mimicking the natural sidetone experience found in traditional telecommunication systems.

However, conventional sidetone processing techniques may suffer from drawbacks such as latency, inadequate signal processing accuracy, and limited adaptability to different user environments and preferences.

### SUMMARY

Accordingly, there is a need for improved audio devices with efficient sidetone processing and methods performed by an audio device, which may mitigate, alleviate, or address the existing shortcomings and may provide improved efficiency of sidetone processing and in turn resulting in reduced latency, lower computational cost, and battery saving.

In other words, there is a need for an improved audio device with sidetone processing capabilities that overcomes these limitations and provides a seamless and natural user experience during voice calls and communication sessions.

An audio device is disclosed. The audio device may be configured to act as a receiver device and/or a transmitter device. The audio device may comprise a memory, an interface, and one or more processors. Optionally the audio device comprises one or more output transducers, such as one or more loudspeakers, and one or more input transducers, such as one or more microphones. In one or more examples or embodiments, the one or more processors are configured to obtain audio data, such as an audio input signal. In other words, the audio device may be configured to obtain audio data, such as the audio input signal, using the one or more processors and/or via the interface.

The audio device comprises a plurality of microphones comprising a first microphone configured to provide a first audio input signal and a second microphone configured to provide a second audio input signal.

The audio device comprises an output transducer configured to output a near-end audio output signal.

The audio device comprises processor circuitry comprising a signal processor module configured to provide a far-end audio output signal and a sidetone module configured to provide a sidetone audio output signal.

The signal processor module is configured to process the first audio input signal and the second audio input signal for provision of a plurality of filter parameters. The sidetone module is configured to obtain first data indicative of the plurality of filter parameters and to process the first audio input signal and the second audio input signal for provision of the sidetone audio output signal using one or more filters based on the first data. The near-end audio output signal may be based on the sidetone audio output signal and/or a far-end audio input signal.

Further, a method for sidetone processing is disclosed. The method is performed by an audio device, such as an audio device as disclosed herein. The audio device comprises a plurality of microphones comprising a first microphone configured to provide a first audio input signal and a second microphone configured to provide a second audio input signal. The audio device comprises an output transducer configured to output a near-end audio output signal. The audio device comprises processor circuitry comprising a signal processor module configured to provide a far-end audio output signal and a sidetone module configured to provide a sidetone audio output signal.

The method comprises obtaining the first audio input signal and the second audio input signal. The method comprises processing, using the signal processor module, the first audio input signal and the second audio input signal for provision of a plurality of filter parameters. The method comprises obtaining, using the sidetone module, first data indicative of the plurality of filter parameters. The method comprises processing, using the sidetone module, the first audio input signal and the second audio input signal for provision of the sidetone audio output signal using one or more filters based on the first data. The method comprises outputting the near-end audio output signal, e.g., based on the sidetone audio output signal and a far-end audio input signal.

The present audio devices and methods provide improved efficiency of sidetone processing and in turn resulting in reduced latency, lower computational cost, and battery saving.

Further, it is an advantage of the present audio devices and methods that the sidetone module has the same or similar noise reduction capabilities as the signal processor module (such as same or similar noise reduction capabilities as the transmission algorithm operated on the signal processor module). This is achieved by having the signal processor module processing the first audio input signal and the second audio input signal for provision of a plurality of filter parameters which may then be used by the sidetone module for sidetone processing, e.g., instead of the sidetone module processing the first audio input signal and the second audio input signal for provision of filter parameters. This may for example reduce the latency of the sidetone processing since the filter parameters are provided from the signal processor module. For example, the noise reduction capabilities may remove background noise from the sidetone signal (such as sidetone audio output signal), e.g., leaving only the user's voice. This provides a clearer and more comfortable user experience, particularly in noisy environments. Furthermore, the present audio devices and methods allow the sidetone and signal processor module to have similar performance, which helps the user to get a realistic impression about the call quality and the quality of their voice that is transmitted to the far end during a call. The present audio devices and methods also allow the signal processor module (such as the transmission algorithm) to run only once which reduces power consumption. This is achieved by having the signal processor module processing the first audio input signal and the second audio input signal for provision of a plurality of filter parameters and at the same time for provision of the far-end audio output signal, e.g., instead of the signal processor module and the sidetone module both processing the same or similar complex algorithm. It may be appreciated that the present audio devices and methods improve the sidetone processing for example by applying filtering, such as Finite Impulse Response, FIR, filtering, to the microphone signals. Specifically, the filters or filter parameters, such as FIR filters, may not be computed by the sidetone module, such as not by a sidetone algorithm operated on the sidetone module, but by the algorithm responsible for creating the far-end audio output signal (such as Tx signal), which is the signal transmitted to the far end during a call. The filter parameters, such as FIR coefficients, may then be transferred to the sidetone path, allowing for a more efficient process. It may be appreciated that this may eliminate the need for the signal processor module algorithm to run twice, and reduces latency, which is important for a natural own-voice experience. Therefore, the present disclosed technique may use a different algorithm and entity of the audio device to compute the filter parameters, such as FIR coefficients, which are then applied to the sidetone path.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an example audio device according to the present disclosure, and
Figs. 2A-2B shows a flow chart of an example method according to the present disclosure.

### DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The figures are schematic and simplified for clarity, and they merely show details which aid understanding the disclosure, while other details have been left out. Throughout, the same reference numerals are used for identical or corresponding parts.

An audio device is disclosed. The audio device may be configured to act as receiver device and/or a transmitter device. In other words, the audio device is configured to receive input signals, such as audio data, from an audio device configured to act as a transmitter device or vice versa. The audio device as disclosed herein may comprise one or more interfaces, one or more audio speakers, one or more microphones, e.g., including a first microphone, one or more processors, and one or more memories. The one or more interfaces may comprise one or more of: a wireless interface, a wireless transceiver, an antenna, an antenna interface, a microphone interface, and a speaker interface.

Further, the audio device may comprise one or more microphones, such as a first microphone, optionally a second microphone, optionally a third microphone and optionally a fourth microphone. The audio device may comprise one or more audio speakers, such as audio receivers, e.g., loudspeaker(s).

The audio device may be seen as an audio device configured to obtain audio data, such as input signals, e.g., audio input signals, output audio signals, and process input signals, such as audio input signals. The audio device may be seen as or comprise a headset, a speakerphone, a hearing aid and/or a video-bar. The audio device may for example be seen as a conference audio device, e.g., configured to be used by a party (such as one or more users at a near-end) to communicate with one or more other parties (such as one or more users at a far-end). The audio device configured to act as a receiver device may also be configured to act as a transmitter device when transmitting back an output signal to the far-end. The receiver audio device and the transmitter audio device may therefore switch between being receiver audio device and transmitter audio device. The audio device may be seen as a smart audio device. The audio device may be used for a conference and/or a meeting between two or more parties being remote from each other. The audio device may be used by one or more users in a vicinity of where the audio device is located, also referred to as a near-end. The audio device may be configured to output, such as using the audio speaker and based on the input signal, an audio device output at the receiver end. The audio device output may be seen as an audio output signal that is an output of the audio speaker at a near-end where the audio device and the user(s) of the audio device are located.

The audio device may be a single audio device. The audio device may be seen as a plurality of interconnected audio devices, such as a system, e.g., an audio device system. The system may comprise one or more users.

In one or more example audio devices, the interface comprises a wireless transceiver, also denoted as a radio transceiver, and an antenna for wireless transmission and reception of an input signal, such as an audio signal, such as for wireless transmission of an output signal and/or wireless reception of a wireless input signal. The audio device may be configured for wireless communication with one or more electronic devices, such as another audio device, a smartphone, a tablet, a computer and/or a smart watch. The audio device optionally comprises an antenna for converting one or more wireless input audio signals to antenna output signal(s). The audio device system and/or the audio device, may be configured for wireless communications via a wireless communication system, such as short-range wireless communications systems, such as Wi-Fi, Bluetooth, Zigbee, IEEE 802.11, IEEE 802.15, infrared and/or the like.

The audio device system and/or the audio device, may be configured for wireless communications via a wireless communication system, such as a 3GPP system, such as a 3GPP system supporting one or more of: New Radio, NR, Narrow-band IoT, NB-loT, and Long Term Evolution - enhanced Machine Type Communication, LTE-M, millimeter-wave communications, such as millimeter-wave communications in licensed bands, such as device-to-device millimeter-wave communications in licensed bands.

In one or more example audio device systems and/or audio devices, the interface of the audio device comprises one or more of: a Bluetooth interface, Bluetooth low energy interface, and a magnetic induction interface. For example, the interface of the audio device may comprise a Bluetooth antenna and/or a magnetic interference antenna.

In one or more example audio devices, the interface may comprise a connector for wired communication, via a connector, such as by using an electrical cable. The connector may connect one or more microphones to the audio device. The connector may connect the audio device to an electronic device, e.g., for wired connection. The connector may be seen as an electrical connector, such as a physical connector for connecting the audio device via an electrical wire to another device.

The one or more interfaces can be or comprise wireless interfaces, such as transmitters and/or receivers, and/or wired interfaces, such as connectors for physical coupling. For example, the audio device may have an input interface configured to receive data, such as a microphone input signal. In one or more example audio devices, the audio device can be used for all form factors in all types of environments, such as for headsets and/or video conference equipment. For example, the audio device may not have a specific microphone placement requirement. In one or more example audio devices, the audio device may comprise an external microphone.

The audio device comprises a plurality of microphones comprising a first microphone configured to provide a first audio input signal and a second microphone configured to provide a second audio input signal. The first audio input signal and the second audio input signal may be based on input signal(s), such as speech and/or sound, from the near-end when obtained from the plurality of microphones, such as the first microphone and/or the second microphone of the audio device.

The audio device comprises an output transducer configured to output a near-end audio output signal. In other words, the audio device may comprise one or more output transducers, such as loudspeakers, configured to output the near-end audio output signal at the near-end, such as output the near-end audio output signal to the user(s) of the audio device. In one or more example audio devices, the processor circuitry is configured to output the near-end audio output signal, such as near-end audio output, via the interface, such as via the output transducer. In other words, the audio device may be configured to output the near-end audio output signal via the wired and/or wireless interface via the one or more speakers (such as output transducers) at the near-end on the audio device itself. In one or more example audio devices, the processor circuitry is configured to output the far-end audio output signal, such as far-end audio output, via the interface. In other words, the audio device may be configured to output the far-end audio output signal via the wired and/or wireless interface via the wired and/or wireless interface such as to a far-end.

The audio device comprises processor circuitry comprising a signal processor module configured to provide a far-end audio output signal and a sidetone module configured to provide a sidetone audio output signal.

The signal processor module may be seen as processor module configured to process one or more audio input signals, such as audio input signals from one or more microphones at the near-end and/or audio input signals from the far-end received via a transceiver (such as a wireless transceiver). In one or more example audio devices, the signal processor module may be seen as or comprises a digital signal processor, DSP. In one or more examples or embodiments, the signal processor module as disclosed herein forms part of the digital signal processor, DSP. In one or more example audio devices, the audio device comprises one or more processors comprising a DSP. The signal processor module may operate on one or more of the processors of the audio device.

The audio device, such as the signal processor module, may be configured to process, such as using the one or more processors, an audio input signal, such as the first audio input signal, the second audio input signal, a third audio input signal, a fourth audio input signal, and/or the far-end audio input signal as disclosed herein, for provision of an audio output signal, such as the near-end audio output signal and/or the far-end audio output signal. The audio device, such as the signal processor module, may be configured to operate according to one or more signal processing algorithms. For example, the audio device, such as the signal processor module, may be configured to operate according to a transmitter algorithm, such as Tx algorithm. In other words, the signal processor module may be configured to operate according to a DSP algorithm. The transmitter algorithm may be seen as or denoted as a signal processor module algorithm.

To process an audio input signal for provision of an audio output signal may comprise to perform one or more audio processing steps of the audio input signal. For example, to process the audio input signal for provision of an audio output signal may comprise to perform, such as using the signal processor module, noise reduction, such as background noise reduction, of the audio input signal, e.g., for provision of a denoised audio output signal. Other examples may comprise to process the audio input signal for provision of an audio output signal may comprise to perform, such as using the signal processor module and/or the Tx algorithm, filtering of the audio input signal for provision of a filtered audio output signal and/or speech enhancement tasks of the audio input signal. Further, to process the audio input signal for provision of an audio output signal may comprise to perform compression of the audio input signal. The signal processor module may perform processing according to the Tx algorithm for provision of the far-end audio output signal and/or the near-end audio output signal, e.g., echo control, dereverberation, denoising, and/or beamforming.

The signal processor module is configured to process the first audio input signal and the second audio input signal for provision of a plurality of filter parameters, such as filtering parameters. For example, the signal processor module may be configured to process the first audio input signal and the second audio input signal for provision of a set of filter parameters to be used by the sidetone module. A filter coefficient may be seen as a numerical value used in a digital filter to adjust the characteristics of the filter's response to an input signal. Filters may be used to modify the frequency content of signals, such as audio, by selectively amplifying or attenuating certain frequency components. In one or more examples or embodiments, the plurality of filter parameters comprise a plurality of finite impulse response, FIR, filter coefficients. In one or more example embodiments, the plurality of filter parameters comprise a plurality of filter gains, e.g., in the frequency domain. Filter parameters may comprise filter coefficients and/or filter gains. In other words, the plurality of filter parameters may be used in a FIR filter configured to filter audio input signals, such as the first audio input signal and/or the second audio input signal.

The sidetone module may be seen as sidetone processor module configured to process one or more audio input signals, such as audio input signals from one or more microphones at the near-end. In one or more example audio devices, the sidetone module may be seen as or comprises a signal processor responsible for managing the processing and generation and control of sidetone feedback during voice communication activities on the audio device. Sidetone may be seen as the sound of the user of the audio device's own voice heard in substantially real-time through the audio device during a voice communication. Sidetone may be used for providing a natural and familiar auditory feedback loop to the speaker or user. The sidetone module may be configured to adjust one or more of: an amplitude, a frequency response, and delay of the audio input signal, such as of the own voice of the user, for provision of a natural sidetone effect that simulates the experience of speaking without the audio device, such as without headphones. The sidetone module may be seen as operating in a low latency audio framework compared to the signal processor module. In other words, the sidetone module may be configured to operate in a lower latency audio framework than the signal processor module.

In one or more examples or embodiments, the sidetone module as disclosed herein forms part of the one or more processors, such as of the digital signal processor, DSP. The sidetone module may operate on one or more of the processors of the audio device.

The audio device, such as the sidetone module, may be configured to process, such as using the one or more processors, an audio input signal, such as the first audio input signal, the second audio input signal, a third audio input signal, and/or a fourth audio input signal as disclosed herein, for provision of a sidetone audio output signal. The audio device, such as the sidetone module, may be configured to operate according to one or more signal processing algorithms. For example, the audio device, such as the sidetone module, may be configured to operate according to a sidetone algorithm, e.g., responsible for managing the processing and generation and control of sidetone feedback during voice communication activities on the audio device. The sidetone module may process the audio input signals in a sidetone processing path whereas the signal processor module may process the audio input signals in a transmitter processing path, such as a digital signal processor processing path.

The sidetone module is configured to obtain first data indicative of and/or based on the plurality of filter parameters. In other words, the sidetone module may be configured to receive, retrieve, and/or determine first data indicative of or based on the plurality of filter parameters. In one or more examples or embodiments, the first data comprises the filter parameters and/or the first data is derived based on the filter parameters. For example, the first data may comprise or be based on a plurality of FIR coefficients from the signal processor module.

The sidetone module is configured to process the first audio input signal and the second audio input signal for provision of the sidetone audio output signal using one or more filters based on the first data. In one or more examples or embodiments, the one or more filters comprise the plurality of filters from the signal processor module. For example, the one or more filters may comprise the plurality of FIR filters from the signal processor module. To process the first audio input signal and the second audio input signal may comprise applying the one or more filters, such as filter parameters, in a filtering process at the sidetone module. For example, the sidetone module may comprise a filtering module, such as a FIR filter, for filtering audio input signals. To process the first audio input signal and the second audio input signal may comprise applying the FIR filter coefficients to the first audio input signal and the second audio input signal in a filtering process at the sidetone module. The sidetone module, such as the filtering module, may be configured to process audio input signals according to the one or more filters for provision of a filter audio output signal.

In one or more example audio devices, the sidetone module is configured to determine the one or more filters based on the first data. In other words, the sidetone module may be configured to determine the one or more filters based on the plurality of filter parameters. In one or more examples or embodiments, the one or more filters comprise the filter parameters and/or the one or more filters are derived based on the filter parameters. For example, the one or more filters may comprise or be based on a plurality of filter coefficients and/or filter gains. For example, the one or more filters may comprise or be based on a plurality of FIR coefficients from the signal processor module.

By obtaining first data indicative of the plurality of filter parameters, the sidetone module has the same or similar noise reduction capabilities as the signal processor module (such as same or similar noise reduction capabilities as the transmission algorithm operated on the signal processor module). This may be achieved by having the signal processor module processing the first audio input signal and the second audio input signal for provision of a plurality of filter parameters which may then be used by the sidetone module for sidetone processing, e.g., instead of the sidetone module processing the first audio input signal and the second audio input signal for provision of filter parameters. This may for example reduce the latency of the sidetone processing since the filter parameters are provided from the signal processor module. For example, the noise reduction capabilities may remove background noise from the sidetone signal (such as sidetone audio output signal), e.g., leaving only the user's voice. This provides a clearer and more comfortable user experience, particularly in noisy environments. Furthermore, the present audio devices and methods allow the sidetone and signal processor module to have similar performance, which helps the user to get a realistic impression about the call quality and the quality of their voice that is transmitted to the far end during a call. The present audio devices allows the signal processor module (such as the transmission algorithm) to run only once which reduces power consumption. This is achieved by having the signal processor module processing the first audio input signal and the second audio input signal for provision of a plurality of filter parameters and at the same time for provision of the far-end audio output signal, e.g., instead of the signal processor module and the sidetone module both processing the same or similar complex algorithm. It may be appreciated that the present audio devices and methods improve the sidetone processing for example by applying filtering, such as Finite Impulse Response, FIR, filtering, to the microphone signals. Specifically, the filters or filter parameters, such as FIR filters, may not be computed by the sidetone module, such as not by a sidetone algorithm operated on the sidetone module, but by the algorithm responsible for creating the far-end audio output signal (such as Tx signal), which is the signal transmitted to the far end during a call. The filter parameters, such as FIR coefficients, may then be transferred to the sidetone path, allowing for a more efficient process. It may be appreciated that this may eliminate the need for the signal processor module algorithm to run twice, and reduces latency, which is important for a natural own-voice experience. Therefore, the present disclosed technique may use a different algorithm and entity of the audio device to compute the filter parameters, such as FIR coefficients, which are then applied to the sidetone path.

The near-end audio output signal is based on the sidetone audio output signal and a far-end input signal. In other words, the audio device may be configured to determine the near-end audio output signal based on the sidetone audio output signal and/or a far-end audio input signal received from the far-end. The audio device may thereby provide an audible feedback of the user's own voice during a voice call or communication session which in turn allows users of the audio device to hear their own voice as they speak. In one or more examples or embodiments, the audio device comprises a mixer configured to mix the sidetone audio output signal and the far-end audio input signal for provision of the near-end audio output signal. In one or more audio devices, the audio device, such as the mixer, is configured to combine the sidetone audio output signal and the far-end audio output signal for provision of a mixer output signal. The mixer may for example be configured to add the sidetone audio output signal with the far-end audio input signal for provision of the mixer audio output signal. The mixer audio output signal may be seen as the near-end audio output signal. For example, the mixer may be configured to generate a mixer output signal comprising portions of the sidetone audio output signal and portions of the far-end audio input signal.

In one or more example audio devices, to obtain first data comprises to perform windowing of the first data for reducing a sample size of the first data. The audio device, such as the sidetone module, may be configured to perform windowing of the plurality of filter parameters obtained from the signal processor module. The audio device, such as the sidetone module, may comprise a windowing module configured to perform windowing of the first data. An output of the windowing module may be seen as a windowed output. Windowing may be performed prior to processing the first audio input signal and the second audio input signal using the one or more filters. In other words, the sidetone module may be configured to multiply the first data, such as the plurality of filter parameters, by a window function before applying the one or more filters. It may be appreciated that for FIR filters having finite-length filter coefficients, window functions may be applied to the FIR filter coefficients to modify their characteristics. For example, FIR filter coefficients may be derived from an ideal frequency response. Therefore, using FIR filter coefficients directly may lead to issues such as spectral leakage and ripples effects in the frequency domain. The use of windowing may taper the filter coefficients smoothly towards zero at the edges, e.g., reducing abruptness of the transition from passband to stopband. Windowing the first data may for example comprise applying a decay window or a Hanning window to the first data, such as to the plurality of filter coefficients.

In one or more example audio devices, the sidetone module is configured to perform smoothing of the first data. The audio device, such as the sidetone module, may be configured to perform smoothing of the plurality of filter parameters obtained from the signal processor module. The audio device, such as the sidetone module, may comprise a smoothing module configured to perform smoothing of the first data. An output of the smoothing module may be seen as a smoothed output. Smoothing may be performed prior to processing the first audio input signal and the second audio input signal using the one or more filters but after a windowing of the first data. The sidetone module may perform smoothing on the windowed output. In other words, the sidetone module may be configured to reduce and/or smooth out sharp transitions and/or irregularities in the plurality of filter parameters, such as in filter frequency response. It may be appreciated that for FIR filters having finite-length filter coefficients, smoothing may be applied to the FIR filter coefficients to reduce or smooth out sharp transitions, ripples, or irregularities in the actual frequency response of the filter. For example, smoothing techniques may comprise modifying filter parameters to achieve a smother frequency response curve with reduced ripples or sharp transitions. Smoothing of the first data may comprise performing interpolation in time domain, e.g., by using a smaller percentage of new filter parameters than percentage of previous filter parameters (such as from a previous iteration) to avoid sudden changes. For example, the sidetone module may be configured to use 10% of new filter parameters, such as from a new iteration of filter parameters determination, and 90% of previous filter parameters.

In one or more example audio devices, an input buffer size of the sidetone module is smaller than or equal to an input buffer size of the signal processor module. In other words, the audio device, such as the sidetone module, may be configured with an input buffer size being smaller than or equal to an input buffer size of the signal processor module. Reducing the input buffer size of the sidetone module allows to reduce the latency in the sidetone path which is advantageous since the sidetone path may be more sensitive to latency than the signal processor module path. In one or more examples or embodiments, an input buffer size for the first audio input signal and the second audio input signal is smaller for the sidetone module than an input buffer size of the signal processor module for the first audio input signal and the second audio input signal. For example, the input buffer size of the sidetone module may be in the range of 16-64 times smaller than the input buffer size of the signal processor module. In one or more example embodiments, the maximum size of the input buffer size of the sidetone module may be when the input buffer size of the sidetone module is equal to the input buffer size of the signal processor module.

In one or more example audio devices, an output buffer size of the sidetone module is smaller than or equal to an output buffer of the signal processor module. In other words, the audio device, such as the sidetone module, may be configured with an output buffer size being smaller than or equal to an output buffer size of the signal processor module. Reducing the output buffer size of the sidetone module allows to reduce the latency in the sidetone path which is advantageous since the sidetone path may be more sensitive to latency than the signal processor module path. In one or more examples or embodiments, an output buffer size for the first audio input signal and the second audio input signal is smaller for the sidetone module than an output buffer size of the signal processor module for the first audio input signal and the second audio input signal. For example, the output buffer size of the sidetone module may be in the range of 16-64 times smaller than the output buffer size of the signal processor module. In one or more example embodiments, the maximum size of the output buffer size of the sidetone module may be when the output buffer size of the sidetone module is equal to the output buffer size of the signal processor module.

For example, the reduction of an input buffer size and/or an output buffer size of the sidetone module, e.g., compared to the signal processor module, may help reduce an impact of algorithmic latency of processing at the audio device, such as an algorithmic latency due to the determination of the plurality of filter parameters.

In one or more example audio devices, the sidetone module comprises a down-sampler and/or an up-sampler configured to reduce an amount of computations at the sidetone module. For example, the down-sampler and/or the up-sampler may be configured to reduce a number of computations, such as reduce the millions of operations per second, at the sidetone module for making the sidetone module computationally efficient. As discussed before, it is advantageous to have an input buffer size being as low as possible. However, there may be a trade-off between buffer size and number of operations. The lower the buffer size the higher to number of operations. However, a lower latency and therefore a lower buffer size may be prioritized over computational efficiency for the sidetone module.

In one or more example audio devices, the audio device comprises an active noise cancelling, ANC, module, configured to obtain and process the sidetone audio output signal based on the first audio input signal and/or the second audio input signal for provision of an ANC audio output signal. The ANC module may be seen as a module configured to process audio input signals to perform ANC on them. For example, the ANC module may perform ANC on the sidetone audio output signal and/or the far-end audio input signal before they are outputted at the audio device, such as at the output transceiver. The sidetone audio output signal may be seen as an ANC module audio input signal. In one or more examples or embodiments, the ANC module may be configured to obtain and process the sidetone audio output signal and the far-end audio input signal for provision of the ANC audio output signal. In one or more examples or embodiments, the ANC module may obtain a mixed signal of the sidetone audio output signal and the far-end audio input signal from the mixer.

In one or more example audio devices, the audio device comprises a third microphone configured to provide a third audio input signal and a fourth microphone configured to provide a fourth audio input signal. In one or more example audio devices, the third microphone is a feedforward microphone, and the fourth microphone is a feedback microphone. In one or more example audio devices, the ANC module is configured to process the sidetone audio output signal based on the third audio input signal and the fourth audio input signal for provision of the ANC audio output signal. In other words, the ANC module may be able to perform feedforward ANC and/or feedback ANC based on the third audio input signal and/or the fourth audio input signal. For example, the ANC module may be configured to perform hybrid ANC based on the first audio input signal, the second audio input signal, the third audio input signal, and/or the fourth audio input signal. In one or more examples or embodiments, the ANC module is configured to process the sidetone audio output signal based on the first audio input signal, the second audio input signal, the third audio input signal, and/or the fourth audio input signal for provision of the ANC audio output signal.

In one or more examples or embodiments, the audio device, such as the ANC module, comprises an ANC governor, such as an ANC control mechanism to manage or regulate the operation of the ANC process. For example, the ANC governor may be configured to determine a gain to be applied to the sidetone audio output signal, such as a gain to be applied by the sidetone module when processing audio input signal before providing the sidetone audio output signal. The ANC governor may be configured to determine the gain based on an audio input signal, such as based on the fourth audio input signal (e.g., based on the feedback microphone audio input signal).

In one or more example audio devices, the audio device is configured to determine the near-end audio output signal based on the ANC audio output signal. For example, the audio device may be configured to apply a gain to the ANC audio output signal for provision of the near-end audio output signal.

In one or more example audio devices, sidetone module is configured to process the third audio input signal and/or the fourth audio input signal for provision of the sidetone audio output signal. To process the third audio input signal and the fourth audio input signal may comprise applying the one or more filters, such as filter parameters, in a filtering process at the sidetone module. For example, the sidetone module may comprise a filtering module, such as a FIR filter, for filtering audio input signals. To process the third audio input signal and the fourth audio input signal may comprise applying the FIR filter coefficients to the third audio input signal and the fourth audio input signal in a filtering process at the sidetone module. The sidetone module, such as the filtering module, may be configured to process audio input signals, such as the first audio input signal, the second audio input signal, the third audio input signal, and/or the fourth audio input signal according to the one or more filters for provision of a filter audio output signal.

In one or more example audio devices, the signal processor module is configured to process the third audio input signal and/or the fourth audio input signal for provision of the plurality of filter parameters. For example, the signal processor module may be configured to process the third audio input signal and the fourth audio input signal for provision of a set of filter parameters to be used by the sidetone module. In other words, the plurality of filter parameters may be used in a FIR filter configured to filter audio input signals, such as the first audio input signal, the second audio input signal, the third audio input signal, and/or the fourth audio input signal.

In one or more example audio devices, the sidetone module is initialized with one or more pre-determined filters for the processing of the first audio input signal and the second audio input signal. In other words, the signal processor module may be configured to obtain or determine one or more pre-determined filter parameters to initialize the sidetone module for the processing of the first audio input signal and the second audio input signal. The first data may comprise the one or more pre-determined filter parameters, such as pre-determined filter coefficients and/or filter gains. The sidetone module may obtain or determine the one or more filters, such as the one or more pre-determined filters, based on the one or more pre-determined filter parameters. Pre-determined filter parameters and pre-determined filters may for example be used to initialize the sidetone module at the beginning of a voice conversation. It may be appreciated that the pre-determined filters may be adaptive or constant.

In one or more example audio devices, the signal processor module comprises a noise reduction module and a first signal processor configured to operate according to a first processing algorithm. The noise reduction module may for example comprise a denoiser and/or an echo controller. The noise reduction module may be seen as a module configured to perform noise reduction on audio input signals, such as background noise reduction. The noise reduction module may be configured to perform noise reduction, voice pick-up or a combination of the two.

In one or more example audio devices, the noise reduction module is configured to process the first audio input signal and the second audio input signal for provision of a noise reduction output, such as a denoised audio output signal. The noise reduction module may be configured to process the first audio input signal, the second audio input signal, the third audio input signal, and/or the fourth audio input signal. In one or more example audio devices, the first signal processor is configured to process the noise reduction output according to the first processing algorithm for provision of the far-end audio output signal. The noise reduction output may be seen as a first signal processor input. The noise reduction module may provide a noise reduction output for each processed audio input signal. For example, the noise reduction module may provide a first noise reduction output for the processed first audio input signal, a second noise reduction output for the processed second audio input signal, a third noise reduction output for the processed third audio input signal, and/or a fourth noise reduction output for the processed fourth audio input signal. The first processing algorithm may be configured to process audio input signals, such as noise reduction outputs, for provision of the far-end audio output signal and/or the one or more filter parameters, such as one or more FIR filter coefficients. The first processing algorithm may be seen as the transmission algorithm as disclosed herein, such as a DSP algorithm. The first processing algorithm may be configured to provide both the far-end audio output signal and the filter parameters as disclosed herein.

In one or more example audio devices, the first signal processor is configured to determine the filter parameters and transmit the filter parameters to the sidetone module. In other words, the first signal processor may be configured to determine the filter parameters using the first processing algorithm. For example, the first signal processor may be configured to determine FIR filter coefficients and transmit the FIR filter coefficients to the sidetone module. In other words, the first signal processor may be configured to transmit first data comprising or being indicative of the filter parameters to the sidetone module.

In one or more example audio devices, the signal processor module is configured to perform wind detection on the first audio input signal and/or the second audio input signal and to provide a wind detection indication to the sidetone module. In one or more examples or embodiments, the first signal processor is configured to perform wind detection on the first audio input signal, the second audio input signal, the third audio input signal, and/or the fourth audio input signal, e.g., using the first processing algorithm. The signal processor module may indicate a wind detection flag to the sidetone module. It may be appreciated that the wind detection flag may be triggered based on one or more criteria being satisfied, such as wind speed, direction, or other environmental factors. The sidetone module may be configured to perform hysteresis on the wind detection indication. For example, performing hysteresis on a wind detection indication, such as a wind detection flag, may involve introducing a delayed and history-dependent response to wind conditions, e.g., improving system stability, reliability, and smoothness of transitions between wind detection states.

In one or more example audio devices, the audio device is configured to perform one or more of: in ear detection, sidetone user gain, and mute button detection. The sidetone module may be configured to obtain information on one or more of: in-ear detection, sidetone user gain, and mute button. The sidetone module may be configured to process the first audio input signal, the second audio input signal, the third audio input signal, and/or the fourth audio input signal based on the in-ear detection information, the sidetone user gain information, and/or the mute button information, e.g., for controlling a gain of the sidetone audio output signal.

For example, the audio device may be configured to detect whether the user is wearing the audio device or not, such as whether the audio device is inserted in and/or on the ear of the user. For example, the audio device may be configured to detect a change or an adjustment of a sidetone user gain, such as the user of the audio device changing a gain of the sidetone manually. For example, the audio device may be configured to detect when a mute button has been present, and a mute function has been activated by the user of the audio device.

A method for side tone processing is disclosed. The method is performed by an audio device. The audio device comprises a plurality of microphones comprising a first microphone configured to provide a first audio input signal and a second microphone configured to provide a second audio input signal. The audio device comprises an output transducer configured to output a near-end audio output signal. The audio device comprises processor circuitry comprising a signal processor module configured to provide a far-end audio output signal and a sidetone module configured to provide a sidetone audio output signal

The method comprises obtaining the first audio input signal and the second audio input signal. The method comprises processing, using the signal processor module, the first audio input signal and the second audio input signal for provision of a plurality of filter parameters. The method comprises obtaining, using the sidetone module, first data indicative of the plurality of filter parameters. The method comprises processing, using the sidetone module, the first audio input signal and the second audio input signal for provision of the sidetone audio output signal using one or more filters based on the first data. The method comprises outputting the near-end audio output signal based on the sidetone audio output signal and a far-end input signal.

In one or more example methods, obtaining first data comprises performing windowing of the first data for reducing a sample size of the first data.

In one or more example methods, processing comprises performing smoothing of the first data.

In one or more example methods, processing comprises reducing an amount of computations at the sidetone module using a down-sampler and/or an up-sampler.

In one or more example methods, the method comprising obtaining and processing the sidetone audio output signal based on the first audio input signal and the second audio input signal for provision of an ANC audio output signal.

In one or more example methods, the audio device comprises a third microphone configured to provide a third audio input signal and a fourth microphone configured to provide a fourth audio input signal. In one or more example methods, the third microphone is a feedforward microphone, and the fourth microphone is a feedback microphone. In one or more example methods, processing comprises processing the sidetone audio output signal based on the third audio input signal and the fourth audio input signal for provision of the ANC audio output signal.

In one or more example methods, outputting the near-end audio output signal comprises determining the near-end audio output signal based on the ANC audio output signal.

In one or more example methods, processing comprises processing the third audio input signal and/or the fourth audio input signal for provision of the sidetone audio output signal.

In one or more example methods, processing comprises processing the third audio input signal and/or the fourth audio input signal for provision of the plurality of filter parameters.

In one or more example methods, the method comprises determining, using the sidetone module, the one or more filters based on the first data.

In one or more example methods, the method comprises initializing the sidetone module with one or more pre-determined filters for the processing of the first audio input signal and the second audio input signal.

In one or more example methods, the signal processor module comprises a noise reduction module and a first signal processor configured to operate according to a first processing algorithm. In one or more example methods, the method comprises processing S104, using the noise reduction module, the first audio input signal and the second audio input signal for provision of a noise reduction output. In one or more example methods, processing S108, using the first signal processor, the noise reduction output according to the first processing algorithm for provision of the far-end audio output signal.

In one or more example methods, processing comprises determining, using the first signal processor, the filter parameters and transmitting the filter parameters to the sidetone module using the first signal processor.

In one or more example methods, the method comprises performing wind detection on the first audio input signal and/or the second audio input signal and providing a wind detection indication to the sidetone module.

In one or more example methods, the method comprises performing one or more of: in ear detection, sidetone user gain, and mute button detection.

It is to be understood that a description of a feature in relation to the audio device is also applicable to the corresponding feature in the method(s) of operating an audio device as disclosed herein and vice versa.

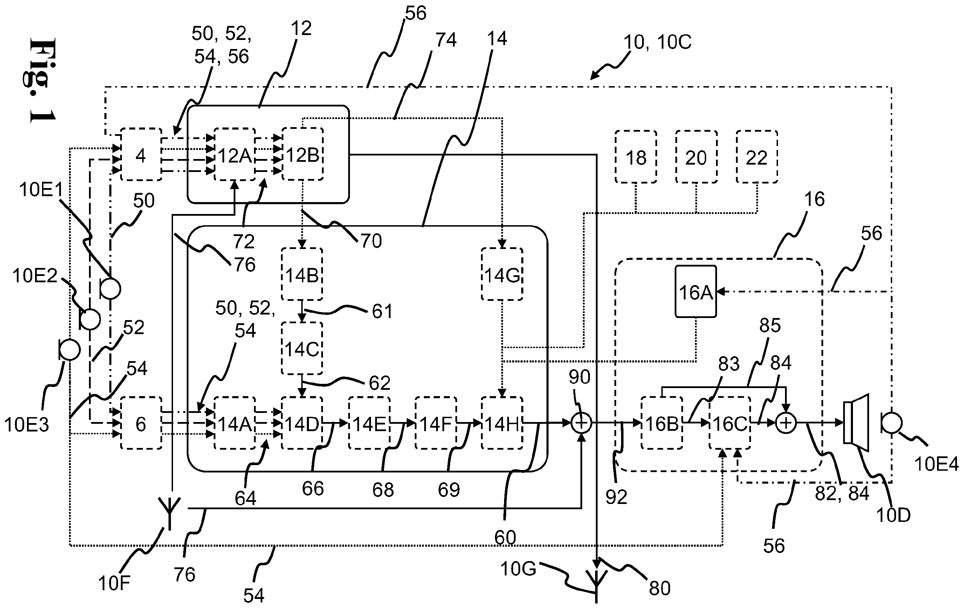

Fig. 1 schematically illustrates an example audio device, such as an audio device 10 according to the present disclosure. The audio device 10 may be seen as an audio communication device. The audio device 10 may be seen as a communication device for performing calls, such as audio and/or video calls. The audio device 10 may be seen as an audio device with sidetone processing.

The audio device 10 may be configured to act as a receiver device and/or a transmitter device. In other words, the audio device 10 may be configured to receive input signals from other audio devices configured to act as transmitter devices and/or configured to transmit output signals to other audio devices. The audio device 10 comprises an interface and a memory, (not shown). Optionally, the audio device 10 comprises an output transducer 10D, and one or more microphones, such as a first microphone 10E1 and a second microphone 10E2. Optionally, the audio device 10 comprises one or more transceivers, such as a first wireless transceiver 10F and a second wireless transceiver 10G. The audio device 10 may be seen as an audio device configured to obtain audio signals, output audio signals, and process audio signals. The audio device 10 may be seen as a conference audio device or a headset audio device, e.g., configured to be used by a party (such as one or more users at a near-end) to communicate with one or more other parties (such as one or more users at a far-end). The audio device 10 may be seen as a smart audio device. The audio device 10 may be used for communication, conference, and/or a meeting between two or more parties being remote from each other. The audio device 10 may be used by one or more users in a vicinity of where the audio device 10 is located, also referred to as a near-end. In the present examples, the receiver end may be seen as the near-end and the transmitter end may be seen as the far-end.

The audio device 10 comprises a plurality of microphones comprising a first microphone 10E1 configured to provide a first audio input signal 50 and a second microphone 10E2 configured to provide a second audio input signal 52. The first audio input signal 50 and the second audio input signal 52 may be based on input signal(s), such as speech and/or sound, from the near-end when obtained from the plurality of microphones, such as the first microphone 10E1 and/or the second microphone 10E2 of the audio device 10.

In one or more examples or embodiments, the audio device 10 may comprise a first calibration module 4 for calibrating the microphone gains of the first audio input signal 50, the second audio input signal 52, the third audio input signal 54, and/or the fourth audio input signal 56 before being input to the signal processor module 12. An output of the first calibration module 4 may be seen as gain calibrated audio input signals, such as gain calibrated first audio input signal 50, second audio input signal 52, third audio input signal 54, and/or fourth audio input signal 56.

In one or more examples or embodiments, the audio device 10 may comprise a second calibration module 6 for calibrating the microphone gains of the first audio input signal 50, the second audio input signal 52, the third audio input signal 54, and/or the fourth audio input signal 56 before being input to the sidetone module 14. An output of the second calibration module 6 may be seen as gain calibrated audio input signals, such as gain calibrated first audio input signal 50, second audio input signal 52, third audio input signal 54, and/or fourth audio input signal 56 (not shown).

The audio device 10 comprises an output transducer 10D configured to output a near-end audio output signal 82. In other words, the audio device 10 may comprise one or more output transducers, such as loudspeakers, configured to output the near-end audio output signal 82 at the near-end, such as output the near-end audio output signal 82 to the user(s) of the audio device 10. In one or more example audio devices, the processor circuitry 10C is configured to output the near-end audio output signal 82, such as near-end audio output, via the interface, such as via the output transducer 10D. In other words, the audio device 10 may be configured to output the near-end audio output signal 82 via a wired and/or wireless interface via the one or more speakers (such as output transducers) at the near-end on the audio device 10 itself. In one or more example audio devices, the processor circuitry 10C is configured to output the far-end audio output signal 80, such as far-end audio output, via the interface, such as the second wireless transceiver 10G. In other words, the audio device 10 may be configured to output the far-end audio output signal 80 via the wired and/or wireless interface via the wired and/or wireless interface, such as to a far-end.

The audio device 10 comprises processor circuitry 10C comprising a signal processor module 12 configured to provide a far-end audio output signal 80 and a sidetone module 14 configured to provide a sidetone audio output signal 60.

The audio device 10, such as the signal processor module 12, may be configured to process, such as using the one or more processors 10C, an audio input signal, such as the first audio input signal 50, the second audio input signal 52, a third audio input signal 54, a fourth audio input signal 56, and/or the far-end audio input signal 76 as disclosed herein, for provision of an audio output signal, such as the near-end audio output signal 82 and/or the far-end audio output signal 80. The audio device 10, such as the signal processor module 12, may be configured to operate according to one or more signal processing algorithms. For example, the audio device 10, such as the signal processor module 12, may be configured to operate according to a transmitter algorithm, such as Tx algorithm. In other words, the signal processor module 12 may be configured to operate according to a DSP algorithm. The transmitter algorithm may be seen as or denoted as a signal processor module algorithm.

The signal processor module 12 is configured to process the first audio input signal 50 and the second audio input signal 52 for provision of a plurality of filter parameters, such as filtering parameters. For example, the signal processor module 12 may be configured to process the first audio input signal 50 and the second audio input signal 52 for provision of a set of filter parameters to be used by the sidetone module 14. A filter coefficient may be seen as a numerical value used in a digital filter to adjust the characteristics of the filter's response to an input signal. Filters may be used to modify the frequency content of signals, such as audio, by selectively amplifying or attenuating certain frequency components. In one or more examples or embodiments, the plurality of filter parameters comprise a plurality of finite impulse response, FIR, filter coefficients. In other words, the plurality of filter parameters may be used in a FIR filter, such as filter 14D, configured to filter audio input signals, such as the first audio input signal 50 and/or the second audio input signal 52.

The sidetone module 14 may be seen as sidetone processor module configured to process one or more audio input signals, such as audio input signals from one or more microphones at the near-end. In one or more example audio devices, the sidetone module 14 may be seen as or comprises a signal processor responsible for managing the processing and generation and control of sidetone feedback during voice communication activities on the audio device. Sidetone may be seen as the sound of the user of the audio device's own voice heard in substantially real-time through the audio device 10 during a voice communication. Sidetone may be used for providing a natural and familiar auditory feedback loop to the speaker or user. The sidetone module 14 may be configured to adjust one or more of: an amplitude, a frequency response, and delay of the audio input signal, such as of the own voice of the user, for provision of a natural sidetone effect that simulates the experience of speaking without the audio device, such as without headphones. The sidetone module 14 may be seen as operating in a low latency audio framework compared to the signal processor module 12. In other words, the sidetone module 14 may be configured to operate in a lower latency audio framework than the signal processor module 12.

In one or more examples or embodiments, the sidetone module 14 as disclosed herein forms part of the one or more processors, such as of the digital signal processor, DSP. The sidetone module 14 may operate on one or more of the processors of the audio device 10.

The audio device 10, such as the sidetone module 14, may be configured to process, such as using the one or more processors, an audio input signal, such as the first audio input signal 50, the second audio input signal 52, a third audio input signal 54, and/or a fourth audio input signal 56 as disclosed herein, for provision of a sidetone audio output signal 60. The audio device 10, such as the sidetone module 14, may be configured to operate according to one or more signal processing algorithms. For example, the audio device 10, such as the sidetone module 14, may be configured to operate according to a sidetone algorithm, e.g., responsible for managing the processing and generation and control of sidetone feedback during voice communication activities on the audio device 10. The sidetone module 14 may process the audio input signals in a sidetone processing path whereas the signal processor module 12 may process the audio input signals in a transmitter processing path, such as a digital signal processor processing path.

The sidetone module 14 is configured to obtain first data 70 indicative of and/or based on the plurality of filter parameters. In other words, the sidetone module 14 may be configured to receive, retrieve, and/or determine first data 70 indicative of or based on the plurality of filter parameters. In one or more examples or embodiments, the first data 70 comprises the filter parameters and/or the first data 70 is derived based on the filter parameters. For example, the first data 70 may comprise or be based on a plurality of FIR coefficients from the signal processor module 12.

The sidetone module 14 is configured to process the first audio input signal 50 and the second audio input signal 52 for provision of the sidetone audio output signal 60 using one or more filters based on the first data 70. In one or more examples or embodiments, the one or more filters comprise the plurality of filters from the signal processor module 12. For example, the one or more filters may comprise the plurality of FIR filters from the signal processor module 12. To process the first audio input signal 50 and the second audio input signal 52 may comprise applying the one or more filters, such as filter parameters, in a filtering process at the sidetone module 14, e.g., at the filter module 14D. For example, the sidetone module 14 may comprise a filtering module 14D, such as a FIR filter, for filtering audio input signals. To process the first audio input signal 50 and the second audio input signal 52 may comprise applying the FIR filter coefficients to the first audio input signal 50 and the second audio input signal 52 in a filtering process at the sidetone module 14. The sidetone module 14, such as the filtering module 14D, may be configured to process audio input signals according to the one or more filters for provision of a filter audio output signal 66.

In one or more example audio devices, the sidetone module 14 is configured to determine the one or more filters based on the first data 70. In other words, the sidetone module 14 may be configured to determine the one or more filters based on the plurality of filter parameters. In one or more examples or embodiments, the one or more filters comprise the filter parameters and/or the one or more filters are derived based on the filter parameters. For example, the one or more filters may comprise or be based on a plurality of FIR coefficients from the signal processor module 12.

By obtaining first data 70 indicative of the plurality of filter parameters, the sidetone module 14 has the same or similar noise reduction capabilities as the signal processor module 12 (such as same or similar noise reduction capabilities as the transmission algorithm operated on the signal processor module 12). This may be achieved by having the signal processor module 12 processing the first audio input signal 50 and the second audio input signal 52 for provision of a plurality of filter parameters which may then be used by the sidetone module 14 for sidetone processing, e.g., instead of the sidetone module 14 processing the first audio input signal 50 and the second audio input signal 52 for provision of filter parameters. This may for example reduce the latency of the sidetone processing since the filter parameters are provided from the signal processor module 12. For example, the noise reduction capabilities may remove background noise from the sidetone signal (such as sidetone audio output signal), e.g., leaving only the user's voice. This provides a clearer and more comfortable user experience, particularly in noisy environments. Furthermore, the present audio devices and methods allow the sidetone module 14 and signal processor module 12 to have similar performance, which helps the user to get a realistic impression about the call quality and the quality of their voice that is transmitted to the far end during a call. The present audio devices allow the signal processor module 12 (such as the transmission algorithm) to run only once which reduces power consumption. This is achieved by having the signal processor module 12 processing the first audio input signal 50 and the second audio input signal 52 for provision of a plurality of filter parameters and at the same time for provision of the far-end audio output signal 80, e.g., instead of the signal processor module 12 and the sidetone module 14 both processing the same or similar complex algorithm. It may be appreciated that the present audio devices and methods improve the sidetone processing for example by applying filtering, such as Finite Impulse Response, FIR, filtering, to the microphone signals (such as 50, 52, 54, 56). Specifically, the filters or filter parameters, such as FIR filters, may not be computed by the sidetone module 14, such as not by a sidetone algorithm operated on the sidetone module, but by the algorithm responsible for creating the far-end audio output signal 80 (such as Tx signal), which is the signal transmitted to the far-end during a call. The filter parameters, such as FIR coefficients, may then be transferred to the sidetone path, allowing for a more efficient process. It may be appreciated that this may eliminate the need for the signal processor module 12 algorithm to run twice, and reduces latency, which is important for a natural own-voice experience. Therefore, the present disclosed technique may use a different algorithm and entity of the audio device 10 to compute the filter parameters, such as FIR coefficients, which are then applied to the sidetone path.

The near-end audio output signal 82 is based on the sidetone audio output signal 60 and a far-end input signal 76. In other words, the audio device 10 may be configured to determine the near-end audio output signal 82 based on the sidetone audio output signal 60 and/or a far-end audio input signal 76 received from the far-end. The audio device 10 may thereby provide an audible feedback of the user's own voice during a voice call or communication session which in turn allows users of the audio device to hear their own voice as they speak. In one or more examples or embodiments, the audio device 10 comprises a mixer 90 configured to mix the sidetone audio output signal 60 and the far-end audio input signal 76 for provision of the near-end audio output signal 82. In one or more audio devices, the audio device 10, such as the mixer 90, is configured to combine the sidetone audio output signal 60 and the far-end audio output signal 76 for provision of a mixer output signal 92. The mixer 90 may for example be configured to add the sidetone audio output signal 60 with the far-end audio input signal 76 for provision of the mixer audio output signal 92. In one or more examples or embodiments, the mixer audio output signal 92 may be seen as the near-end audio output signal 82. For example, the mixer 90 may be configured to generate a mixer output signal 92 comprising portions of the sidetone audio output signal 60 and portions of the far-end audio input signal 76. The mixer 90 may be configured to control the gains of the sidetone audio output signal 60 and the far-end audio input signal 76.

In one or more example audio devices, to obtain first data 70 comprises to perform windowing of the first data 70 for reducing a sample size of the first data 70. The audio device 10, such as the sidetone module 14, may be configured to perform windowing of the plurality of filter parameters obtained from the signal processor module 12. The audio device 10, such as the sidetone module 14, may comprise a windowing module 14B configured to perform windowing of the first data 70. An output of the windowing module 14B may be seen as a windowed output 61. Windowing may be performed prior to processing the first audio input signal 50 and the second audio input signal 52 using the one or more filters. In other words, the sidetone module 14 may be configured to multiply the first data 70, such as the plurality of filter parameters, by a window function before applying the one or more filters. It may be appreciated that for FIR filters having finite-length filter coefficients, window functions may be applied to the FIR filter coefficients to modify their characteristics. For example, FIR filter coefficients may be derived from an ideal frequency response. Therefore, using FIR filter coefficients directly may lead to issues such as spectral leakage and ripples effects in the frequency domain. The use of windowing may taper the filter coefficients smoothly towards zero at the edges, e.g., reducing abruptness of the transition from passband to stopband. Windowing the first data 70 may for example comprise applying a decay window or a Hanning window to the first data 70, such as to the plurality of filter parameters.

In one or more example audio devices, the sidetone module 14 is configured to perform smoothing of the first data 70. The audio device 10, such as the sidetone module 14, may be configured to perform smoothing of the plurality of filter parameters obtained from the signal processor module 12. The audio device 10, such as the sidetone module 14, may comprise a smoothing module 14C configured to perform smoothing of the first data 70. An output of the smoothing module 14C may be seen as a smoothed output 62. Smoothing may be performed prior to processing the first audio input signal 50 and the second audio input signal 52 using the one or more filters but after a windowing of the first data 70. The smoothing module 14C may be configured to perform smoothing of the windowed output 61 for provision of the smoothed output 62. The sidetone module 14 may perform smoothing on the windowed output 61. In other words, the sidetone module 14 may be configured to reduce and/or smooth out sharp transitions and/or irregularities in the plurality of filter parameters, such as in filter frequency response. It may be appreciated that for FIR filters having finite-length filter coefficients, smoothing may be applied to the FIR filter coefficients to reduce or smooth out sharp transitions, ripples, or irregularities in the actual frequency response of the filter. For example, smoothing techniques may comprise modifying filter coefficients to achieve a smother frequency response curve with reduced ripples or sharp transitions. Smoothing of the first data may comprise performing interpolation in time domain, e.g., by using a smaller percentage of new filter parameters than percentage of previous filter parameters (such as from a previous iteration) to avoid sudden changes. For example, the sidetone module 14 may be configured to use 10% of new filter parameters, such as from a new iteration of filter parameters determination, and 90% of previous filter parameters.

In one or more example audio devices, an input buffer size of the sidetone module 14 is smaller than or equal to an input buffer size of the signal processor module 12. In other words, the audio device 10, such as the sidetone module 14, may be configured with an input buffer size being smaller than or equal to an input buffer size of the signal processor module 12. Reducing the input buffer size of the sidetone module 14 allows to reduce the latency in the sidetone path which is advantageous since the sidetone path may be more sensitive to latency than the signal processor module path. In one or more examples or embodiments, an input buffer size for the first audio input signal 50 and the second audio input signal 52 is smaller for the sidetone module 14 than an input buffer size of the signal processor module 12 for the first audio input signal 50 and the second audio input signal 52.

In one or more example audio devices, an output buffer size of the sidetone module 14 is smaller than or equal to an output buffer of the signal processor module 12. In other words, the audio device 10, such as the sidetone module 14, may be configured with an output buffer size being smaller than or equal to an output buffer size of the signal processor module 12. Reducing the output buffer size of the sidetone module 12 allows to reduce the latency in the sidetone path which is advantageous since the sidetone path may be more sensitive to latency than the signal processor module 12 path. In one or more examples or embodiments, an output buffer size for the first audio input signal 50 and the second audio input signal 52 is smaller for the sidetone module 14 than an output buffer size of the signal processor module 12 for the first audio input signal 50 and the second audio input signal 52.

For example, the reduction of an input buffer size and/or an output buffer size of the sidetone module 14, e.g., compared to the signal processor module 12, may help reduce an impact of algorithmic latency of processing at the audio device 10, such as an algorithmic latency due to the determination of the plurality of filter parameters.

In one or more example audio devices, the sidetone module 14 comprises a down-sampler 14A and/or an up-sampler 14E configured to reduce an amount of computations at the sidetone module 14. For example, the down-sampler 14A and/or the up-sampler 14E may be configured to reduce a number of computations, such as reduce the millions of operations per second, at the sidetone module 14 for making the sidetone module 14 computationally efficient. As discussed before, it is advantageous to have an input buffer size being as low as possible. However, there may be a trade-off between buffer size and number of operations. The lower the buffer size the higher to number of operations. However, a lower latency and therefore a lower buffer size may be prioritized over computational efficiency for the sidetone module 14. An output of the down-sampler 4A may be seen as down-sampled audio input signals 64. An output of the up-sampler 14E may be seen as an up-sampled audio output signal 68.

In one or more example audio devices, the audio device 10 comprises an active noise cancelling, ANC, module 16, configured to obtain and process the sidetone audio output signal 60 based on the first audio input signal 50 and/or the second audio input signal 52 for provision of an ANC audio output signal 84. The ANC module 16 may be seen as a module configured to process audio input signals to perform ANC on them. For example, the ANC module 16 may perform ANC on the sidetone audio output signal 60 and/or the far-end audio input signal 76 before they are outputted at the audio device 10, such as at the output transceiver 10D. The sidetone audio output signal 60 and/or the mixer output signal 92 may be seen as an ANC module audio input signal. In one or more examples or embodiments, the ANC module 16 may be configured to obtain and process the sidetone audio output signal 60 and the far-end audio input signal 76 for provision of the ANC audio output signal 84. In one or more examples or embodiments, the ANC audio output signal 84 may be the near-end audio output signal 82. In one or more examples or embodiments, the ANC module 16 may obtain a mixed signal 92 of the sidetone audio output signal 60 and the far-end audio input signal 76 from the mixer 90.

In one or more example audio devices, the audio device 10 comprises a third microphone 10E3 configured to provide a third audio input signal 54 and a fourth microphone 10E4 configured to provide a fourth audio input signal 56. In one or more example audio devices, the third microphone 10E3 is a feedforward microphone and the fourth microphone 10E4 is a feedback microphone. In one or more example audio devices, the ANC module 16 is configured to process the sidetone audio output signal 60 based on the third audio input signal 54 and the fourth audio input signal 56 for provision of the ANC audio output signal 84. In other words, the ANC module 16 may be able to perform feedforward ANC and/or feedback ANC based on the third audio input signal 54 and/or the fourth audio input signal 56. For example, the ANC module 16 may be configured to perform hybrid ANC based on the first audio input signal 50, the second audio input signal 52, the third audio input signal 54, and/or the fourth audio input signal 56. In one or more examples or embodiments, the ANC module 16 comprises a hybrid ANC module 16C for performing hybrid ANC. In one or more examples or embodiments, the ANC module 16 is configured to process the sidetone audio output signal 60 based on the first audio input signal 50, the second audio input signal 52, the third audio input signal 54, and/or the fourth audio input signal 56 for provision of the ANC audio output signal 84. In one or more example embodiments, the ANC module 16 comprises a filter module 16B. It may be appreciated that the ANC module 16, such as the hybrid ANC module 16C, may cancel the sidetone audio output signal 60. To avoid this, the filter module 16B may apply a filter to the sidetone audio output signal 60 for provision of a filter module output 83. The filter module 16B may be configured to provide a filter tuned to match a receiver-to-in-ear microphone response. The filter may therefore simulate the sidetone signal, such as sidetone audio output signal, at the in-ear microphone and subtract this from the feedback loop, to avoid cancelling the sidetone audio output signal.

In one or more examples or embodiments, the audio device 10, such as the ANC module 16, comprises an ANC governor 16A, such as an ANC control mechanism to manage or regulate the operation of the ANC process. For example, the ANC governor 16A may be configured to determine a gain to be applied to the sidetone audio output signal 60, such as a gain to be applied by the sidetone module 14 when processing audio input signal before providing the sidetone audio output signal 60. The ANC governor 16A may be configured to determine the gain based on an audio input signal, such as based on the fourth audio input signal 56 (e.g., based on the feedback microphone audio input signal).

In one or more example audio devices, the audio device 10 is configured to determine the near-end audio output signal 82 based on the ANC audio output signal 84. For example, the audio device may be configured to apply a gain to the ANC audio output signal 84 for provision of the near-end audio output signal. In one or more example embodiments, the filter module 16B may control 85 the gain to be applied to the ANC audio output signal 84.

In one or more example audio devices, the sidetone module 14 is configured to process the third audio input signal 54 and/or the fourth audio input signal 56 for provision of the sidetone audio output signal 60. To process the third audio input signal 54 and the fourth audio input signal 56 may comprise applying the one or more filters, such as filter parameters, in a filtering process at the sidetone module 14. For example, the sidetone module 14 may comprise a filtering module 14D, such as a FIR filter, for filtering audio input signals. To process the third audio input signal 54 and the fourth audio input signal 56 may comprise applying the FIR filter coefficients to the third audio input signal 54 and the fourth audio input signal 56 in a filtering process at the sidetone module 14. The sidetone module 14, such as the filtering module 14D, may be configured to process audio input signals, such as the first audio input signal 50, the second audio input signal 52, the third audio input signal 54, and/or the fourth audio input signal 56 according to the one or more filters for provision of a filter audio output signal 66. In one or more examples or embodiments, the filter audio output signal 66 may be seen as an input to the up-sampler 14E.

In one or more examples or embodiments, the audio device 10, such as the sidetone module 14, comprises an equalizer 14F configured to equalize the up-sampler audio output signal 68 for provision of an equalized audio output signal 69.

In one or more examples or embodiments, the audio device 10, such as the sidetone module 14, comprises a gain controller 14H configured to control a gain of the sidetone audio output signal 60.

In one or more example audio devices, the signal processor module 12 is configured to process the third audio input signal 54 and/or the fourth audio input signal 56 for provision of the plurality of filter parameters. For example, the signal processor module 12 may be configured to process the third audio input signal 54 and the fourth audio input signal 56 for provision of a set of filter parameters to be used by the sidetone module 14. In other words, the plurality of filter parameters may be used in a FIR filter configured to filter audio input signals, such as the first audio input signal 50, the second audio input signal 52, the third audio input signal 54, and/or the fourth audio input signal 56.

In one or more example audio devices, the sidetone module 14 is initialized with one or more pre-determined filters for the processing of the first audio input signal 50 and the second audio input signal 52. In other words, the signal processor module 12 may be configured to obtain or determine one or more pre-determined filter parameters to initialize the sidetone module 14 for the processing of the first audio input signal 50 and the second audio input signal 52. The first data 70 may comprise the one or more pre-determined filter parameters. The sidetone module 14 may obtain or determine the one or more filters, such as the one or more pre-determined filters, based on the one or more pre-determined filter parameters. Pre-determined filter parameters and pre-determined filters may for example be used to initialize the sidetone module 14 at the beginning of a voice conversation. It may be appreciated that the pre-determined filters may be adaptive or constant.

In one or more example audio devices, the signal processor module 12 comprises a noise reduction module 12A and a first signal processor 12B configured to operate according to a first processing algorithm. The noise reduction module 12A may for example comprise a denoiser and/or an echo controller. The noise reduction module 12A may be seen as a module configured to perform noise reduction on audio input signals, such as background noise reduction. The noise reduction module 12A may be configured to perform noise reduction, voice pick-up or a combination of the two.

In one or more example audio devices, the noise reduction module 12A is configured to process the first audio input signal 50 and the second audio input signal 52 for provision of a noise reduction output, such as denoised audio output signals 72. The noise reduction module 12A may be configured to process the first audio input signal 50, the second audio input signal 52, the third audio input signal 54, and/or the fourth audio input signal 56. In one or more example audio devices, the first signal processor 12B is configured to process the noise reduction output, such as noise reduction output signals 72, according to the first processing algorithm for provision of the far-end audio output signal 80. The noise reduction output, such as noise reduction output signals 72, may be seen as a first signal processor input. The noise reduction module 12A may provide a noise reduction output for each processed audio input signal. For example, the noise reduction module 12A may provide a first noise reduction output for the processed first audio input signal, a second noise reduction output for the processed second audio input signal, a third noise reduction output for the processed third audio input signal, and/or a fourth noise reduction output for the processed fourth audio input signal. The first processing algorithm may be configured to process audio input signals, such as noise reduction outputs, for provision of the far-end audio output signal 80 and/or the one or more filter parameters, such as one or more FIR filter coefficients, e.g., comprised in the first data 70. The first processing algorithm may be seen as the transmission algorithm as disclosed herein, such as a DSP algorithm. The first processing algorithm may be configured to provide both the far-end audio output signal 80 and the filter parameters, such as first data 70, as disclosed herein.

In one or more example audio devices, the first signal processor 12B is configured to determine the filter parameters and transmit the filter parameters to the sidetone module 14. In other words, the first signal processor 12B may be configured to determine the filter parameters using the first processing algorithm. For example, the first signal processor may be configured to determine FIR filter coefficients and transmit the FIR filter coefficients to the sidetone module 14. In other words, the first signal processor 12B may be configured to transmit first data 70 comprising or being indicative of the filter parameters to the sidetone module 14.

In one or more example audio devices, the signal processor module 12 is configured to perform wind detection on the first audio input signal 50 and/or the second audio input signal 52 and to provide a wind detection indication 74 to the sidetone module 14. In one or more examples or embodiments, the first signal processor 12B is configured to perform wind detection on the first audio input signal 50, the second audio input signal 52, the third audio input signal 54, and/or the fourth audio input signal 56, e.g., using the first processing algorithm. The signal processor module 12 may indicate a wind detection flag to the sidetone module 14. It may be appreciated that the wind detection flag may be triggered based on one or more criteria being satisfied, such as wind speed, direction, or other environmental factors. The sidetone module 14 may be configured to perform hysteresis on the wind detection indication 74. The sidetone module 14 may comprise a hysteresis module 14G configured to perform hysteresis on the wind detection indication 74. For example, performing hysteresis on a wind detection indication, such as a wind detection flag, may involve introducing a delayed and history-dependent response to wind conditions, e.g., improving system stability, reliability, and smoothness of transitions between wind detection states.

In one or more example audio devices, the audio device 10 is configured to perform one or more of: in ear detection, sidetone user gain, and mute button detection. In other words, the audio device 10 may comprise an in-ear detection module 18 for performing in ear detection, a sidetone user gain module 20 for performing sidetone user gain detection, and/or a mute button detection module 22 for performing mute button detection. The sidetone module 14 may be configured to obtain information on one or more of: in-ear detection, sidetone user gain detection, and mute button detection. The sidetone module 14 may be configured to process the first audio input signal 50, the second audio input signal 52, the third audio input signal 54, and/or the fourth audio input signal 56 based on the in-ear detection information, the sidetone user gain information, and/or the mute button information, e.g., for controlling a gain, e.g., with the gain controller 14H, of the sidetone audio output signal 60.

For example, the audio device 10 may be configured to detect whether the user is wearing the audio device or not, such as whether the audio device 10 is inserted in and/or on the ear of the user. For example, the audio device 10 may be configured to detect a change or an adjustment of a sidetone user gain, such as the user of the audio device 10 changing a gain of the sidetone manually. For example, the audio device may be configured to detect when a mute button has been present, and a mute function has been activated by the user of the audio device.

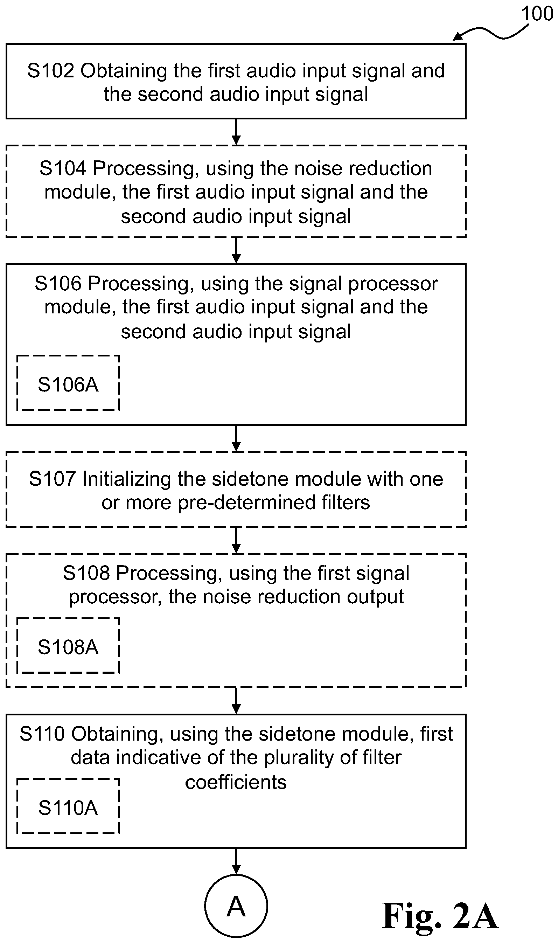

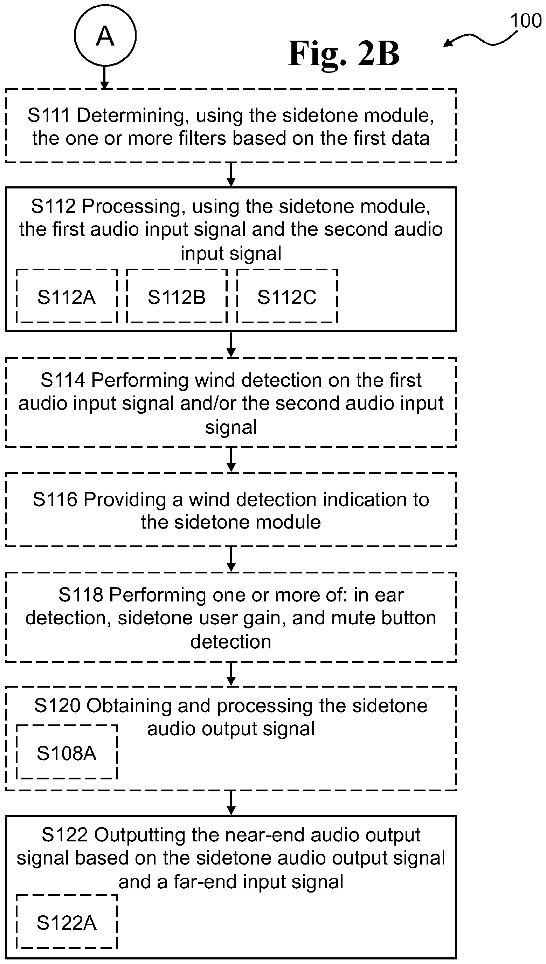

The audio device 10 may be configured to perform any of the methods disclosed in Figs. 2A-2B.

The operations of the audio device 10 may be embodied in the form of executable logic routines (for example, lines of code, software programs, etc.) that are stored on a non-transitory computer readable medium (for example, memory) and are executed by the processor circuitry 10C).

Furthermore, the operations of the audio device 10 may be considered a method that the audio device 10 is configured to carry out. Also, while the described functions and operations may be implemented in software, such functionality may as well be carried out via dedicated hardware or firmware, or some combination of hardware, firmware and/or software.

Memory of the audio device may be one or more of a buffer, a flash memory, a hard drive, a removable media, a volatile memory, a non-volatile memory, a random-access memory (RAM), or other suitable device. In a typical arrangement, memory may include a non-volatile memory for long term data storage and a volatile memory that functions as system memory for the processor circuitry 10C. The memory may exchange data with the processor circuitry 10C over a data bus. Control lines and an address bus between the memory and the processor circuitry 10C also may be present (not shown in Fig. 1). The memory is considered a non-transitory computer readable medium.

The memory may be configured to store information such as filter parameters, filter coefficients, filter gains, processing filters, and processing algorithms as disclosed herein in a part of the memory.

Figs. 2A-2B show a flow diagram of an example method, such as a method 100.

A method for side tone processing is disclosed. The method is performed by an audio device. The audio device comprises a plurality of microphones comprising a first microphone configured to provide a first audio input signal and a second microphone configured to provide a second audio input signal. The audio device comprises an output transducer configured to output a near-end audio output signal. The audio device comprises processor circuitry comprising a signal processor module configured to provide a far-end audio output signal and a sidetone module configured to provide a sidetone audio output signal

The method comprises obtaining S102 the first audio input signal and the second audio input signal. The method comprises processing S106, using the signal processor module, the first audio input signal and the second audio input signal for provision of a plurality of filter parameters. The method comprises obtaining S110, using the sidetone module, first data indicative of the plurality of filter parameters. The method comprises processing S112, using the sidetone module, the first audio input signal and the second audio input signal for provision of the sidetone audio output signal using one or more filters based on the first data. The method comprises outputting S122 the near-end audio output signal based on the sidetone audio output signal and a far-end input signal.

In one or more example methods, obtaining S110 first data comprises performing S110A windowing of the first data for reducing a sample size of the first data.

In one or more example methods, processing S112 comprises performing S112A smoothing of the first data.

In one or more example methods, processing S112 comprises reducing S112B an amount of computations at the sidetone module using a down-sampler and/or an up-sampler.

In one or more example methods, the method comprising obtaining and processing S120 the sidetone audio output signal based on the first audio input signal and the second audio input signal for provision of an ANC audio output signal.

In one or more example methods, the audio device comprises a third microphone configured to provide a third audio input signal and a fourth microphone configured to provide a fourth audio input signal. In one or more example methods, the third microphone is a feedforward microphone, and the fourth microphone is a feedback microphone. In one or more example methods, processing S120 comprises processing (S120A) the sidetone audio output signal based on the third audio input signal and the fourth audio input signal for provision of the ANC audio output signal.

In one or more example methods, outputting S122 the near-end audio output signal comprises determining S122A the near-end audio output signal based on the ANC audio output signal.

In one or more example methods, processing S112 comprises processing S112C the third audio input signal and/or the fourth audio input signal for provision of the sidetone audio output signal.

In one or more example methods, processing S106 comprises processing S106A the third audio input signal and/or the fourth audio input signal for provision of the plurality of filter parameters.

In one or more example methods, the method comprises determining S111, using the sidetone module, the one or more filters based on the first data.

In one or more example methods, the method comprises initializing S107 the sidetone module with one or more pre-determined filters for the processing of the first audio input signal and the second audio input signal.

In one or more example methods, the signal processor module comprises a noise reduction module and a first signal processor configured to operate according to a first processing algorithm. In one or more example methods, the method comprises processing S104, using the noise reduction module, the first audio input signal and the second audio input signal for provision of a noise reduction output. In one or more example methods, processing S108, using the first signal processor, the noise reduction output according to the first processing algorithm for provision of the far-end audio output signal.

In one or more example methods, processing S108 comprises determining S108A, using the first signal processor, the filter parameters and transmitting the filter parameters to the sidetone module using the first signal processor.

In one or more example methods, the method comprises performing S114 wind detection on the first audio input signal and/or the second audio input signal and providing S116 a wind detection indication to the sidetone module.

In one or more example methods, the method comprises performing S118 one or more of: in ear detection, sidetone user gain, and mute button detection.

Examples of audio devices, systems, and methods according to the disclosure are set out in the following items:
Item 1. An audio device comprising:
   - a plurality of microphones comprising a first microphone configured to provide a first audio input signal and a second microphone configured to provide a second audio input signal;
   - an output transducer configured to output a near-end audio output signal; and
   - processor circuitry comprising a signal processor module configured to provide a far-end audio output signal and a sidetone module configured to provide a sidetone audio output signal,
   wherein the signal processor module is configured to process the first audio input signal and the second audio input signal for provision of a plurality of filter parameters, wherein the sidetone module is configured to obtain first data indicative of the plurality of filter parameters and to process the first audio input signal and the second audio input signal for provision of the sidetone audio output signal using one or more filters based on the first data, and wherein the near-end audio output signal is based on the sidetone audio output signal and a far-end audio input signal.
Item 2. The audio device according to item 1, wherein to obtain first data comprises to perform windowing of the first data for reducing a sample size of the first data.
Item 3. The audio device according to any of the previous items, wherein the sidetone module is configured to perform smoothing of the first data.
Item 4. The audio device according to any of the previous items, wherein an input buffer size of the sidetone module is smaller than or equal to an input buffer size of the signal processor module.
Item 5. The audio device according to any of the previous items, wherein an output buffer size of the sidetone module is smaller than or equal to an output buffer of the signal processor module.
Item 6. The audio device according to any of the previous items, wherein the sidetone module comprises a down-sampler and/or an up-sampler configured to reduce an amount of computations at the sidetone module.
Item 7. The audio device according to any of the previous items, wherein the audio device comprises an active noise cancelling, ANC, module, configured to obtain and process the sidetone audio output signal based on the first audio input signal and/or the second audio input signal for provision of an ANC audio output signal.
Item 8. The audio device according to item 7, wherein the audio device comprises a third microphone configured to provide a third audio input signal and a fourth microphone configured to provide a fourth audio input signal, wherein the third microphone is a feedforward microphone and the fourth microphone is a feedback microphone, wherein the ANC module is configured to process the sidetone audio output signal based on the third audio input signal and the fourth audio input signal for provision of the ANC audio output signal.
Item 9. The audio device according to any of items 7-8, wherein the audio device is configured to determine the near-end audio output signal based on the ANC audio output signal.
Item 10. The audio device according to any of items 7-9, wherein the sidetone module is configured to process the third audio input signal and/or the fourth audio input signal for provision of the sidetone audio output signal.
Item 11. The audio device according to any of items 7-9, wherein the signal processor module is configured to process the third audio input signal and/or the fourth audio input signal for provision of the plurality of filter parameters.
Item 12. The audio device according to any of the previous items, wherein the sidetone module is configured to determine the one or more filters based on the first data.
Item 13. The audio device according to any of the previous items, wherein the sidetone module is initialized with one or more pre-determined filters for the processing of the first audio input signal and the second audio input signal.
Item 14. The audio device according to any of the previous items, wherein the signal processor module comprises a noise reduction module and a first signal processor configured to operate according to a first processing algorithm, wherein the noise reduction module is configured to process the first audio input signal and the second audio input signal for provision of a noise reduction output, and wherein the first signal processor is configured to process the noise reduction output according to the first processing algorithm for provision of the far-end audio output signal.
Item 15. The audio device according to item 14, wherein the first signal processor is configured to determine the filter parameters and transmit the filter parameters to the sidetone module.
Item 16. The audio device according to any of the previous items, wherein the signal processor module is configured to perform wind detection on the first audio input signal and/or the second audio input signal and to provide a wind detection indication to the sidetone module.
Item 17. The audio device according to any of the previous items, wherein the audio device is configured to perform one or more of: in ear detection, sidetone user gain, and mute button detection.
Item 18. A method, performed by an audio device, for sidetone processing, wherein the audio device comprises a plurality of microphones comprising a first microphone configured to provide a first audio input signal and a second microphone configured to provide a second audio input signal; an output transducer configured to output a near-end audio output signal; and processor circuitry comprising a signal processor module configured to provide a far-end audio output signal and a sidetone module configured to provide a sidetone audio output signal, wherein the method comprises:
   - obtaining (S102) the first audio input signal and the second audio input signal;
   - processing (S106), using the signal processor module, the first audio input signal and the second audio input signal for provision of a plurality of filter parameters;
   - obtaining (S110), using the sidetone module, first data indicative of the plurality of filter parameters;
   - processing (S112), using the sidetone module, the first audio input signal and the second audio input signal for provision of the sidetone audio output signal using one or more filters based on the first data; and
   - outputting (S122) the near-end audio output signal based on the sidetone audio output signal and a far-end input signal.
Item 19. The method according to item 18, wherein obtaining (S110) first data comprises performing (S110A) windowing of the first data for reducing a sample size of the first data.
Item 20. The method according to any of items 18-19, wherein processing (S112) comprises performing (S112A) smoothing of the first data.
Item 21. The method according to any of items 18-20, wherein processing (S112) comprises reducing (S112B) an amount of computations at the sidetone module using a down-sampler and/or an up-sampler.
Item 22. The method according to any of items 18-21, the method comprising:
   - obtaining and processing (S120) the sidetone audio output signal based on the first audio input signal and the second audio input signal for provision of an ANC audio output signal.
Item 23. The method according to item 22, wherein the audio device comprises a third microphone configured to provide a third audio input signal and a fourth microphone configured to provide a fourth audio input signal, wherein the third microphone is a feedforward microphone and the fourth microphone is a feedback microphone, wherein processing (S120) comprises processing (S120A) the sidetone audio output signal based on the third audio input signal and the fourth audio input signal for provision of the ANC audio output signal.
Item 24. The method according to any of items 22-23, wherein outputting (S122) the near-end audio output signal comprises determining (S122A) the near-end audio output signal based on the ANC audio output signal.
Item 25. The method according to any of items 23-24, wherein processing (S112) comprises processing (S112C) the third audio input signal and/or the fourth audio input signal for provision of the sidetone audio output signal.
Item 26. The method according to any of items 23-25, wherein processing (S106) comprises processing (S106A) the third audio input signal and/or the fourth audio input signal for provision of the plurality of filter parameters.
Item 27. The method according to any of items 18-26, wherein the method comprises:
   - determining (S111), using the sidetone module, the one or more filters based on the first data.
Item 28. The method according to any of items 18-27, wherein the method comprises:
   - initializing (S107) the sidetone module with one or more pre-determined filters for the processing of the first audio input signal and the second audio input signal.
Item 29. The method according to any of items 18-28, wherein the signal processor module comprises a noise reduction module and a first signal processor configured to operate according to a first processing algorithm, wherein the method comprises:
   - processing (S104), using the noise reduction module, the first audio input signal and the second audio input signal for provision of a noise reduction output; and
   - processing (S108), using the first signal processor, the noise reduction output according to the first processing algorithm for provision of the far-end audio output signal.
Item 30. The method according to item 29, wherein processing (S108) comprises determining (S108A), using the first signal processor, the filter parameters and transmitting the filter parameters to the sidetone module using the first signal processor.
Item 31. The method according to any of items 18-30, wherein the method comprises:
   - performing (S114) wind detection on the first audio input signal and/or the second audio input signal and providing (S116) a wind detection indication to the sidetone module.
Item 32. The method according to any of items 18-31, wherein the method comprises:
   - performing (S118) one or more of: in ear detection, sidetone user gain, and mute button detection.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

It may be appreciated that the figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. It should be appreciated that these operations need not be performed in order presented. Furthermore, it should be appreciated that not all of the operations need to be performed. The example operations may be performed in any order and in any combination. It should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

It is to be noted that the word "comprising" does not necessarily exclude the presence of other elements or steps than those listed.

It is to be noted that the words "a" or "an" preceding an element do not exclude the presence of a plurality of such elements.

It is to be noted that the term "indicative of" may be seen as "associated with", "related to", "descriptive of", "characterizing", and/or "defining". The terms "indicative of', "associated with", "related to", "descriptive of", "characterizing", and "defining" can be used interchangeably. The term "indicative of' can be seen as indicating a relation. For example, weight data indicative of weight may comprise one or more weight parameters.

It is to be noted that the word "based on" may be seen as "as a function of' and/or "derived from". The terms "based on" and "as a function of' can be used interchangeably. For example, a parameter determined "based on" a data set can be seen as a parameter determined "as a function of" the data set. In other words, the parameter may be an output of one or more functions with the data set as an input.

A function may be characterizing a relation between an input and an output, such as mathematical relation, a database relation, a hardware relation, logical relation, and/or other suitable relations.

It should further be noted that any reference signs do not limit the scope of the claims, that the examples may be implemented at least in part by means of both hardware and software, and that several "means", "units" or "devices" may be represented by the same item of hardware.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An audio device comprising:
- a plurality of microphones comprising a first microphone configured to provide a first audio input signal and a second microphone configured to provide a second audio input signal;
- an output transducer configured to output a near-end audio output signal; and
- processor circuitry comprising a signal processor module configured to provide a far-end audio output signal and a sidetone module configured to provide a sidetone audio output signal,
wherein the signal processor module is configured to process the first audio input signal and the second audio input signal for provision of a plurality of filter parameters, wherein the sidetone module is configured to obtain first data indicative of the plurality of filter parameters and to process the first audio input signal and the second audio input signal for provision of the sidetone audio output signal using one or more filters based on the first data, and wherein the near-end audio output signal is based on the sidetone audio output signal and a far-end audio input signal.

2. The audio device according to claim 1, wherein to obtain first data comprises to perform windowing of the first data for reducing a sample size of the first data.

3. The audio device according to any of the previous claims, wherein the sidetone module is configured to perform smoothing of the first data.

4. The audio device according to any of the previous claims, wherein an input buffer size of the sidetone module is smaller than or equal to an input buffer size of the signal processor module.

5. The audio device according to any of the previous claims, wherein an output buffer size of the sidetone module is smaller than or equal to an output buffer of the signal processor module.

6. The audio device according to any of the previous claims, wherein the sidetone module comprises a down-sampler and/or an up-sampler configured to reduce an amount of computations at the sidetone module.

7. The audio device according to any of the previous claims, wherein the audio device comprises an active noise cancelling, ANC, module, configured to obtain and process the sidetone audio output signal based on the first audio input signal and/or the second audio input signal for provision of an ANC audio output signal.

8. The audio device according to claim 7, wherein the audio device comprises a third microphone configured to provide a third audio input signal and a fourth microphone configured to provide a fourth audio input signal, wherein the third microphone is a feedforward microphone and the fourth microphone is a feedback microphone, wherein the ANC module is configured to process the sidetone audio output signal based on the third audio input signal and the fourth audio input signal for provision of the ANC audio output signal.

9. The audio device according to any of claims 7-8, wherein the sidetone module is configured to process the third audio input signal and/or the fourth audio input signal for provision of the sidetone audio output signal.

10. The audio device according to any of claims 7-8, wherein the signal processor module is configured to process the third audio input signal and/or the fourth audio input signal for provision of the plurality of filter parameters.

11. The audio device according to any of the previous claims, wherein the sidetone module is configured to determine the one or more filters based on the first data.

12. The audio device according to any of the previous claims, wherein the sidetone module is initialized with one or more pre-determined filters for the processing of the first audio input signal and the second audio input signal.

13. The audio device according to any of the previous claims, wherein the signal processor module comprises a noise reduction module and a first signal processor configured to operate according to a first processing algorithm, wherein the noise reduction module is configured to process the first audio input signal and the second audio input signal for provision of a noise reduction output, and wherein the first signal processor is configured to process the noise reduction output according to the first processing algorithm for provision of the far-end audio output signal.

14. The audio device according to claim 13, wherein the first signal processor is configured to determine the filter parameters and transmit the filter parameters to the sidetone module.

15. A method, performed by an audio device, for sidetone processing, wherein the audio device comprises a plurality of microphones comprising a first microphone configured to provide a first audio input signal and a second microphone configured to provide a second audio input signal; an output transducer configured to output a near-end audio output signal; and processor circuitry comprising a signal processor module configured to provide a far-end audio output signal and a sidetone module configured to provide a sidetone audio output signal, wherein the method comprises:
- obtaining (S102) the first audio input signal and the second audio input signal;
- processing (S106), using the signal processor module, the first audio input signal and the second audio input signal for provision of a plurality of filter parameters;
- obtaining (S110), using the sidetone module, first data indicative of the plurality of filter parameters;
- processing (S112), using the sidetone module, the first audio input signal and the second audio input signal for provision of the sidetone audio output signal using one or more filters based on the first data; and
- outputting (S122) the near-end audio output signal based on the sidetone audio output signal and a far-end input signal.
